# EUROPEAN PATENT SPECIFICATION

(11) **EP 3 029 880 B1**
(45) Date of publication and mention of the grant of the patent: **09.11.2022**
(21) Application number: 14832031.0
(22) Date of filing: 25.07.2014
(51) Int. Cl.: H04L 9/16, G06Q 20/20, G06Q 20/40, H04L 9/06, G06Q 20/00, G06Q 20/38

(54) **METHOD AND SYSTEM FOR SAFELY TRANSMITTING TRANSACTION SENSITIVE DATA BASED ON CLOUD POS**
VERFAHREN UND SYSTEM ZUR SICHEREN ÜBERTRAGUNG SENSIBLER TRANSAKTIONSDATEN BASIEREND AUF EINEM POS IN DER CLOUD
PROCÉDÉ ET SYSTÈME POUR TRANSMETTRE DE FAÇON SÉCURISÉE DES DONNÉES SENSIBLES DE TRANSACTION SUR LA BASE D'UN POS EN NUAGE

(30) Priority: 31.07.2013 CN 201310326834
(43) Date of publication of application: 08.06.2016
(73) Proprietor: China Unionpay Co., Ltd., Pudong, Shanghai 200135 (CN)
(72) Inventor: CHENG, Zhiqiang, Shanghai 200135 (CN); HE, Zhou, Shanghai 200135 (CN); WANG, Qi, Shanghai 200135 (CN); HE, Shuo, Shanghai 200135 (CN)
(74) Representative: Seemann & Partner Patentanwälte mbB
(86) International application number: PCT/CN2014/083003
(87) International publication number: WO 2015/014245

(56) References cited:
- WO-A1-98/52316
- CN-A- 102 214 377
- CN-A- 102 214 377
- CN-A- 102 647 274
- CN-A- 103 035 078
- CN-B- 101 593 389
- GB-A- 2 457 367
- US-A1- 2013 132 219
- Girmay Teamrat Desta: "Security for Mobile Payment Transaction", Master of Science Thesis, 1 January 2012 (2012-01-01), XP055345833, Stockholm, Sweden Retrieved from the Internet: URL:http://www.diva-portal.org/smash/get/d iva2:600353/FULLTEXT01.pdf [retrieved on 2017-02-14]

## Description

### TECHNICAL FIELD

The present invention relates to a secure transfer method for a cloud-based Point of Sale transaction sensitive data performed by a cloud Point of Sale background system or by a Point of Sale terminal. Further the invention relates to a secure transfer system for a cloud-based Point of Sale transaction sensitive data.

### BACKGROUND ART

A Point Of Sale (POS) terminal is a settlement terminal that may enable a bankcard consumption by a cardholding consumer and has been widely used in various consuming situations such as shopping malls, efficiently meeting the consumer's demand for the bankcard consumption and improving the consumer's consumption experience.

The Point of Sale terminal is to implement a bankcard consumption by primarily reading the account information of the card held by the consumer and sending it, together with the amount of consumption and the merchant's information, to the financial acquiring platform, which then implements the charging of the consumer, wherein the Point of Sale terminal is an apparatus certificated by the financial acquiring platform, has an unique identification representative of the merchant information, and is an apparatus representative of the terminal holder. The Point of Sale terminal is required to be registered on the financial acquiring platform before it is brought into use. After the financial platform has received the consumption information sent by the Point of Sale terminal, it first identity the identification of the Point of Sale terminal, and charges the consumer. The process for charging the consumer is one for transferring the amount of consumption of the consumer from the account of the consumer to the account of the merchant.

Existing Point of Sale terminals would typically communicate with financial acquiring platform(s) directly. As they employ backward technical architectures, problems such as too high Point of Sale operation and maintenance cost, difficulty of promoting new services for terminals, and the like often arise. In addition, as for existing Point of Sale terminals, most of them employ dial-in approaches, wherein the security of the transaction data is completely dependent on private network channels; while others of them employ Internet access approaches, wherein the security of the transaction data is completely dependent on secure network channels such as 3G.. That is, the transaction data itself is not guaranteed by additional secure measures.

Girmay Teamrat Desta: "Security for Mobile Payment Transaction", Master of Science Thesis discloses a mobile client, which communicates with a payment server in that it sends a ticket and a service request to the payment server. In return, the payment server communicates a shared key and grants access to the system. An encrypted communication channel is established and payment information is communicated from the mobile client to the payment server through this encrypted channel.

Moreover, CN102214377A discloses a cloud Point of Sale terminal that is a handheld terminal capable of performing bankcard consumption.

CN 101593389 A discloses a key management for a POS terminal. The key management method comprises the following steps: a PSAM card issuing unit sends a key dispersion request to an encryptor through a pre-transaction processing unit, wherein the key dispersion request carries dispersion factors; the encryptor generates a primary key according to the dispersion factors and sends the primary key to the PSAM card issuing unit through the pre-transaction processing unit; the PSAM card issuing unit writes the primary key into the PSAM card and distributes a card to the POS terminal; and the pre-transaction processing unit synchronously integrates the mapping relationship between the PSAM card and the POS terminal.

### SUMMARY OF THE INVENTION

To address the foregoing problem(s), the inventor of the present invention proposes an Internet secure access approach of employing cloud Point of Sale that while guaranteeing the security of the access channel, employs the secure encryption of the financial transaction data to better improve the transaction security for financial Point of Sale and facilitate the development of Point of Sale industry.

According to an aspect of the present invention, there is provided a secure transfer method for cloud-based Point of Sale transaction sensitive data performed by a cloud Point of Sale background system, comprising steps of: (a) exchanging a transaction process key with the cloud Point of Sale terminal; (b) receiving, from the cloud Point of Sale terminal, a transaction request packet encrypted by using the transaction process key; and (c) obtaining a transaction sensitive data from the transaction request packet, and performing operations on the transaction sensitive data by using the transaction process key in order to upload to the financial acquiring platform, wherein the step (a) comprises steps of receiving a sign-in request, emanating the transaction process key through a transaction primary key which is recorded in the cloud Point of Sale background system, wherein the transaction primary key corresponds to the cloud Point of Sale terminal and is manually injected into a secure module of the cloud Point of Sale terminal during the initialization of the cloud Point of Sale terminal; generating a sign-in response packet, which contains the emanated transaction process key; and sending the sign-in response package down to the cloud Point of Sale terminal through a secure channel; wherein the step (c) comprises: parsing the transaction request packet to obtain the transaction sensitive data; using the transaction process key to decrypt and validate the integrity of the data; and uploading the transaction sensitive data to the financial acquiring platform in an appropriate packet format.

According to another aspect of the present invention, there is provided a secure transfer method for a cloud Point of Sale transaction sensitive data performed by a cloud Point of Sale terminal, comprising steps of: (a) exchanging a transaction process key with a cloud Point of Sale background system; (b) obtaining a transaction sensitive data, and using the transaction process key to symmetrically encrypt the transaction sensitive data; and (c) sending, through a secure channel, a transaction request packet to the cloud Point of Sale background system which processes the packet and sends it to a financial acquiring platform, wherein the transaction request packet contains the encrypted transaction sensitive data; wherein step (a) comprises steps of initiating a sign-in request to the cloud Point of Sale background system through a secure channel; receiving the sign-in response packet from the cloud Point of Sale background system, the sign-in response packet containing the transaction process key emanated by the transaction encryption detection module in the cloud Point of Sale background system through the transaction primary key, wherein the transaction primary key corresponds to the cloud Point of Sale terminal, and is manually injected into the secure module of the cloud Point of Sale terminal during the initialization of the cloud Point of Sale terminal; and storing the transaction process key protected by the transaction primary key.

According to another aspect of the present invention, there is provided a secure transfer system for a cloud-based Point of Sale transaction sensitive data, comprising: a cloud Point of Sale background system and a cloud Point of Sale terminal, wherein the cloud Point of Sale background system contains a transaction encryption/decryption module for managing the transaction process key and for performing the encryption/decryption operation on the transaction sensitive data; and a transaction primary key which is recorded in the cloud Point of Sale background system, wherein the transaction primary key corresponds to the cloud Point of Sale terminal; wherein the cloud Point of Sale terminal contains a secure module for saving at least a transaction process key and the transaction primary key for the terminal, wherein the transaction primary key is manually injected into the secure module of the cloud Point of Sale terminal during the initialization of the cloud Point of Sale terminal; wherein before the user of the cloud Point of Sale terminal carries out the financial transaction, the cloud Point of Sale background system exchanges the transaction process key with the cloud Point of Sale terminal; the payment application running on the cloud Point of Sale terminal accesses the encrypted interface of the secure module, the secure module symmetrically encrypts the transaction sensitive data through the transaction process key, and returns the encrypted ciphertext to the payment application; the payment application sends a transaction request packet to the cloud Point of Sale background system through a secure channel; the cloud Point of Sale background system parses the transaction request packet to obtain the transaction sensitive data, and then uses the transaction process key to decrypt; the cloud Point of Sale background systems uploads the transaction sensitive data to a financial acquiring platform in an appropriate packet format, wherein the cloud Point of Sale terminal is configured to exchange the transaction process key with the cloud Point of Sale background system in the following manner: the payment application running on the cloud Point of Sale terminal initiates a sign-in request to the cloud Point of Sale background system through the secure channel; after the cloud Point of Sale background system has received the sign-in request, the transaction encryption/decryption module therein emanates the transaction process key through the transaction primary key, and then generates the sign-in packet containing the emanated transaction process key, and sends it down to the cloud Point of Sale terminal through the secure channel; and after the cloud Point of Sale terminal has received the sign-in response packet, the payment application accesses the secure module to save the transaction process key in the secure module, wherein the transaction process key is protected by the transaction primary key.

### BRIEF DESCRIPTION OF DRAWINGS

Various aspects of the present invention will be readily apparent to those of ordinary skill in the art when embodiments of the present invention are read with reference to the accompanying drawings. It should be understood by those of ordinary skill in the art that these accompanying drawing are used only to illustrate technical solutions of the present invention in conjunction with embodiments, and are not intended to limit the claimed scope of the present invention.

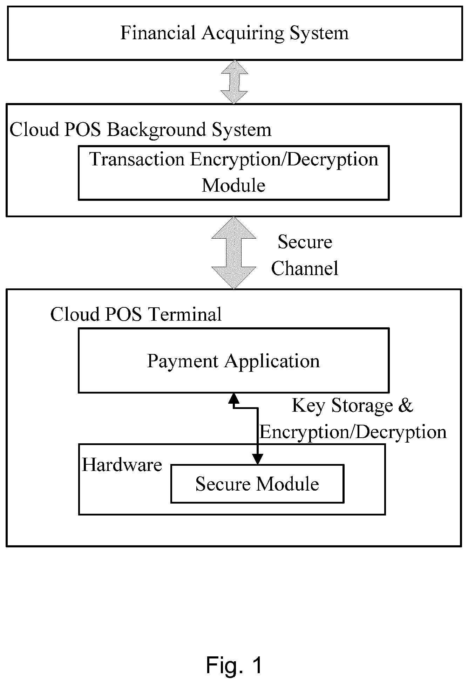

Fig. 1 is a schematic diagram of a secure transfer system for a cloud-based Point of Sale transaction sensitive data in accordance with one embodiment of the present invention.

### DETAILED DESCRIPTION OF EMBODIMENTS

What is introduced below is some of possible embodiments of the present invention, aiming to provide a basic understanding of the present invention and not to identify the key or deterministic element or define the claimed scope. It is readily appreciated that other implementations that may be replaced with each other may be advised by those of ordinary skill in the art according to technical solutions of the present invention, without altering the essential spirit of the present invention. Therefore, the following embodiments and accompanying drawings are only illustrative of technical solutions of the present invention, and should not be regarded as the entirety of the present invention or as definition or limitation of technical solutions of the present invention.

Referring to Fig. 1, it shows a schematic diagram of a secure transfer system for a cloud-based Point of Sale transaction sensitive data in accordance with one embodiment of the present invention.

As shown in Fig. 1, a secure module is part of a cloud Point of Sale terminal hardware that includes, but is not limited to, a password keyboard, a cloud Point of Sale secure storage module (which is located on a terminal hardware motherboard or embedded in a CPU) and the like. The secure module can save at least a transaction primary key and a transaction process key, and can perform an encryption/decryption operation.

The payment application runs on the cloud Point of Sale terminal system, main functions of which include: (1) a secure storage of the transaction process key (before carrying out the financial transaction operation with the cloud Point of Sale background system, it has to first negotiate the transaction process key with the background, and then securely store the transaction progress key in the secure module (the transaction process key is protected by the transaction primary key)); and (2) transaction data encryption/decryption (obtain and display user input/output data (a card number, a CVN number, a transaction amount, etc.)). After obtaining the user transaction data, the payment application symmetrically encrypts the transaction data through the secure module (the encryption algorithm is not limited to DES, 3DES and the like), and then uploads the transaction data to the cloud Point of Sale background system through the secure channel.

The transaction encryption/decryption module is one of important parts of the cloud Point of Sale background system, main functions of which includes: (1) management of transaction process key (before carrying out the financial transaction, the transaction process key is emanated through the transaction primary key, then is sent down to the cloud Point of Sale terminal, and is securely stored by the payment application for encryption/decryption of the transaction data); (2) decryption of the transaction sensitive data uploaded by the payment application, output of the transaction sensitive data plaintext thereafter, and upload of the transaction sensitive data plaintext to the financial acquiring platform in some packet format.

According to one embodiment of the present invention, a secure transfer method for a cloud-based Point of Sale transaction sensitive data is performed by the system as shown in Fig.1. Specifically, the transaction process key management flow may be illustrated as follows:
Firstly, when the cloud Point of Sale terminal is deployed, parameter initialization of the cloud Point of Sale terminal is performed manually. The transaction primary key (there are a record in the cloud Point of Sale background system) corresponding to this piece of terminal is injected into the secure module of the cloud Point of Sale terminal.

Secondly, the cloud Point of Sale terminal user (cashier) first carries out the transaction process key negotiation operation (sign-in operation) before the financial transaction (transactions such as consumption, pre-authorization, etc.) is carried out.

Thirdly, the whole sign-in flow is as follows: (1) the payment application initiates the sign-in request to the cloud Point of Sale background system (hereinafter "background") through the secure channel; (2) after the background has received the request, the transaction encryption/decryption module therein emanates the transaction process key through the transaction primary key, then generates the sign-in response packet, and sends it down to the cloud Point of Sale terminal through the secure channel; and (3) after the cloud Point of Sale terminal has received the response packet, the payment application accesses the secure module, and securely saves the transaction process key in the secure module (the transaction process key is protected by the transaction primary key).

Fourthly, the flow ends.

The secure transfer flow of the transaction sensitive data is as follows:
Firstly, the cloud Point of Sale terminal user (cashier) carries out the financial transaction (transactions such as consumption, pre-authorization, etc.), and the payment application obtains the transaction data (the card number, the CVN number, the transaction amount, etc.).

Secondly, the payment application accesses the encrypted interface of the secure module, which then symmetrically encrypts the transaction sensitive data (the card number, the CNV number, the transaction amount, etc.) through the transaction process key being sign-in negotiated, and returns the encrypted ciphertext to the payment application.

Thirdly, the payment application sends the transaction request packet to the background through the secure channel.

Fourthly, the background parses the transaction request packet, obtains the transaction sensitive data, then uses the transaction process key to decrypt and perform data integrity validation and the like, and finally uploads it to the financial acquiring platform in some packet format.

Fifthly, the flow ends.

To summarize the above, the present invention is to propose a novel secure transfer solution for cloud Point of Sale transaction data that uses a dynamical process key encryption approach, and encrypts the transaction sensitive data while guaranteeing the security of the transaction access channel, improving the security of the transaction data. The solution has the following advantages:
1. Supplement of the transaction security for a traditional terminal, which is advantageous for the promotion and development of the cloud Point of Sale terminal, facilitating the development of financial Point of Sale industry.
2. In the solution, a traditional financial acquiring platform is not required to be modified, and is simple to be implemented with good compatibility.

The embodiments of the present invention are described above with reference to accompanying drawings. However, those of ordinary skill in the art can be appreciated that various alterations and substitutions may be made to the embodiments of the present invention without departing from the spirit and scope of the present invention. These alterations and substitutions will fall within the scope of the present invention as defined by the appended claims.

## Claims

1. A secure transfer method for a cloud-based Point of Sale transaction sensitive data performed by a cloud Point of Sale background system, comprising steps of:
(a) exchanging a transaction process key with a cloud Point of Sale terminal;
(b) receiving, from the cloud Point of Sale terminal, a transaction request packet encrypted by using the transaction process key; and
(c) obtaining a transaction sensitive data from the transaction request packet, and performing operations on the transaction sensitive data by using the transaction process key in order to upload to a financial acquiring platform;
wherein the step (a) comprise:
- receiving a sign-in request from a payment application in the cloud Point of Sale terminal;
- based on the sign-in request, emanating the transaction process key through a transaction primary key which is recorded in the cloud Point of Sale background system, wherein the transaction primary key corresponds to the cloud Point of Sale terminal, and is manually injected into a secure module of the cloud Point of Sale terminal during the initialization of the cloud Point of Sale terminal;
- generating a sign-in response packet, the packet containing the emanated transaction process key; and
- sending the sign-in response packet down to the cloud Point of Sale terminal through a secure channel;
wherein the step (c) comprises:
- parsing the transaction request packet to obtain the transaction sensitive data;
- using the transaction process key to decrypt and perform data integrity validation; and
- uploading the transaction sensitive data to the financial acquiring platform in an appropriate packet format.

2. A secure transfer method for a cloud-based Point of Sale transaction sensitive data performed by a cloud Point of Sale terminal, comprising steps of:
(a) exchanging a transaction process key with a cloud Point of Sale background system;
(b) obtaining the transaction sensitive data, and using the transaction process key to symmetrically encrypt the transaction sensitive data; and
(c) sending, through a secure channel, a transaction request packet to the cloud Point of Sale background system, which processes the packet and then uploads it to a financial acquiring platform, wherein the transaction request packet contains the encrypted transaction sensitive data;
wherein the step (a) comprises:
- initiating a sign-in request to the cloud Point of Sale background system through a secure channel;
- receiving the sign-in response packet from the cloud Point of Sale background system, the sign-in response packet containing the transaction process key emanated by a transaction encryption/decryption module in the cloud Point of Sale background system through a transaction primary key, wherein the transaction primary key corresponds to the cloud Point of Sale terminal, and is manually injected into the secure module of the cloud Point of Sale terminal during the initialization of the cloud Point of Sale terminal; and
- storing the transaction process key protected by the transaction primary key.

3. A secure transfer system for a cloud-based Point of Sale transaction sensitive data, comprising:
a cloud Point of Sale background system and a cloud Point of Sale terminal,
wherein the cloud Point of Sale background system contains:
- a transaction encryption/decryption module for managing a transaction process key and for performing the encryption/decryption operation on the transaction sensitive data; and
- a transaction primary key which is recorded in the cloud Point of Sale background system, wherein the transaction primary key corresponds to the cloud Point of Sale terminal;
wherein the cloud Point of Sale terminal contains a secure module for at least saving the transaction process key and the transaction primary key for the terminal, wherein the transaction primary key is manually injected into the secure module of the cloud Point of Sale terminal during the initialization of the cloud Point of Sale terminal;
wherein before the cloud Point of Sale terminal user carries out the financial transaction, the cloud Point of Sale background system exchanges the transaction process key with the cloud Point of Sale terminal; the payment application running on the cloud Point of Sale terminal accesses the encrypted interface of the secure module, the secure module symmetrically encrypts the transaction sensitive data through the transaction process key, and returns the encrypted ciphertext to the payment application; the payment application sends a transaction request packet to the cloud Point of Sale background system through a secure channel; the cloud Point of Sale background system parses the transaction request packet, obtains the transaction sensitive data, and then uses the transaction process key to decrypt; the cloud Point of Sale background uploads the transaction sensitive data to a financial acquiring platform in an appropriate packet format, wherein the cloud Point of Sale terminal is configured to exchange the transaction process key with the cloud Point of Sale background system in the following manner:
the payment application running on the cloud Point of Sale terminal initiates the sign-in request to the cloud Point of Sale background system through the secure channel;
after the cloud Point of Sale background system has received the sign-in request, the transaction encryption/decryption module therein emanates the transaction process key through the transaction primary key, then generates the sign-in response packet containing the emanated transaction process key, and sends it down to the cloud Point of Sale terminal through the secure channel; and
after the cloud Point of Sale terminal has received the sign-in response packet, the payment application accesses the secure module to save the transaction process key in the secure module, wherein the transaction process key is protected by the transaction primary key.

## Patentansprüche

1. Verfahren zur sicheren Übertragung für cloudbasierte sensible Point-of-Sale-Transaktionsdaten, ausgeführt von einem Point-of-Sale-Hintergrundsystem in der Cloud, das folgende Schritte umfasst:
(a) Austauschen eines Transaktionsprozessschlüssels mit einem Point-of-Sale-Terminal in der Cloud;
(b) Empfangen, von dem Point-of-Sale-Terminal in der Cloud, eines Transaktionsanforderungspakets das unter Verwendung des Transaktionsprozessschlüssels verschlüsselt wird; und
(c) Erhalten von sensiblen Transaktionsdaten aus dem Transaktionsanforderungspaket und Ausführen von Operationen an den sensiblen Transaktionsdaten unter Verwendung des Transaktionsprozessschlüssels zum Hochladen auf eine Finanzerfassungsplattform;
wobei der Schritt (a) Folgendes umfasst:
- Empfangen einer Anmeldeanforderung von einer Zahlungsanwendung in dem Point-of-Sale-Terminal in der Cloud;
- Aussenden, basierend auf der Anmeldeaufforderung, des Transaktionsprozessschlüssels über einen primären Transaktionsschlüssel, der in dem Point-of-Sale-Hintergrundsystem in der Cloud aufgezeichnet ist, wobei der primäre Transaktionsschlüssel dem Point-of-Sale-Terminal in der Cloud entspricht und während der Initialisierung des Point-of-Sale-Terminals in der Cloud manuell in ein sicheres Modul des Point-of-Sale-Terminals in der Cloud eingegeben wird;
- Erzeugen eines Anmeldeantwortpakets, wobei das Paket den ausgesendeten Transaktionsprozessschlüssel enthält; und
- Senden des Anmeldeantwortpakets über einen sicheren Kanal herunter an das Point-of-Sale-Terminal in der Cloud;
wobei der Schritt (c) Folgendes umfasst:
- Parsen des Transaktionsanforderungspakets, um die sensiblen Transaktionsdaten zu erhalten;
- Verwenden des Transaktionsprozessschlüssels zum Entschlüsseln und Ausführen einer Datenintegritätsvalidierung; und
- Hochladen der sensiblen Transaktionsdaten in einem geeigneten Paketformat auf die Finanzerfassungsplattform.

2. Verfahren zur sicheren Übertragung für cloudbasierte sensible Point-of-Sale-Transaktionsdaten, ausgeführt von einem Point-of-Sale-Terminal in der Cloud, das folgende Schritte umfasst:
(a) Austauschen eines Transaktionsprozessschlüssels mit einem Point-of-Sale-Hintergrundsystem in der Cloud;
(b) Erhalten der sensiblen Transaktionsdaten und Verwenden des Transaktionsprozessschlüssels zum symmetrischen Verschlüsseln der sensiblen Transaktionsdaten; und
(c) Senden, über einen sicheren Kanal, eines Transaktionsanforderungspakets an das Point-of-Sale-Hintergrundsystem in der Cloud, welches das Paket verarbeitet und es anschließend auf eine Finanzerfassungsplattform hochlädt, wobei das Transaktionsanforderungspaket die verschlüsselten sensiblen Transaktionsdaten enthält;
wobei der Schritt (a) Folgendes umfasst:
- Initiieren einer Anmeldeaufforderung für das Point-of-Sale-Hintergrundsystem in der Cloud über einen sicheren Kanal;
- Empfangen des Anmeldeantwortpakets von dem Point-of-Sale-Hintergrundsystem in der Cloud, wobei das Anmeldeantwortpaket den Transaktionsprozessschlüssel enthält, der von einem Transaktionsverschlüsselungs-/entschlüsselungsmodul in dem Point-of-Sale-Hintergrundsystem in der Cloud über einen primären Transaktionsschlüssel ausgesendet wird, wobei der primäre Transaktionsschlüssel dem Point-of-Sale-Terminal in der Cloud entspricht und während der Initialisierung des Point-of-Sale-Terminals in der Cloud manuell in das sichere Modul des Point-of-Sale-Terminals in der Cloud eingegeben wird; und
- Speichern des Transaktionsprozessschlüssels, der durch den primären Transaktionsschlüssel geschützt wird.

3. System zur sicheren Übertragung für cloudbasierte sensible Point-of-Sale-Transaktionsdaten, umfassend:
ein Point-of-Sale-Hintergrundsystem in der Cloud und ein Point-of-Sale-Terminal in der Cloud,
wobei das Point-of-Sale-Hintergrundsystem in der Cloud Folgendes umfasst:
- ein Transaktionsverschlüsselungs-/entschlüsselungsmodul zum Verwalten eines Transaktionsprozessschlüssels und zum Ausführen der Verschlüsselungs/Entschlüsselungsoperation an den sensiblen Transaktionsdaten; und
- einen primären Transaktionsschlüssel, der in dem Point-of-Sale-Hintergrundsystem in der Cloud aufgezeichnet ist, wobei der primäre Transaktionsschlüssel dem Point-of-Sale-Terminal in der Cloud entspricht;
wobei das Point-of-Sale-Terminal in der Cloud ein sicheres Modul zum Speichern zumindest des Transaktionsprozessschlüssels und des primären Transaktionsschlüssels für das Terminal umfasst, wobei der primäre Transaktionsschlüssel während der Initialisierung des Point-of-Sale-Terminals in der Cloud manuell in das sichere Modul des Point-of-Sale-Terminals in der Cloud eingegeben wird;
wobei, bevor der Benutzer des Point-of-Sale-Terminals in der Cloud die Finanztransaktion durchführt, das Point-of-Sale-Hintergrundsystem in der Cloud den Transaktionsprozessschlüssel mit dem Point-of-Sale-Terminal in der Cloud austauscht; die Zahlungsanwendung, die auf dem Point-of-Sale-Terminal in der Cloud ausgeführt wird, auf die verschlüsselte Schnittstelle des sicheren Moduls zugreift, das sichere Modul die sensiblen Transaktionsdaten über den Transaktionsprozessschlüssel symmetrisch verschlüsselt und den verschlüsselten Chiffretext an die Zahlungsanwendung zurückgibt; die Zahlungsanwendung ein Transaktionsanforderungspaket über einen sicheren Kanal an das Point-of-Sale-Hintergrundsystem in der Cloud sendet; das Point-of-Sale-Hintergrundsystem in der Cloud das Transaktionsanforderungspaket parst, die sensiblen Transaktionsdaten erhält und den Transaktionsprozessschlüssel anschließend zum Entschlüsseln verwendet; das Point-of-Sale-Hintergrundsystem in der Cloud die sensiblen Transaktionsdaten in einem geeigneten Paketformat auf eine Finanzerfassungsplattform hochlädt, wobei das Point-of-Sale-Terminal in der Cloud so ausgestaltet ist, dass es den Transaktionsprozessschlüssel mit dem Point-of-Sale-Hintergrundsystem in der Cloud in der folgenden Weise austauscht:
die Zahlungsanwendung, die auf dem Point-of-Sale-Terminal in der Cloud ausgeführt wird, initiiert die Anmeldeanforderung für das Point-of-Sale-Hintergrundsystem in der Cloud über den sicheren Kanal;
nachdem das Point-of-Sale-Hintergrundsystem in der Cloud die Anmeldeanforderung empfangen hat, sendet das Transaktionsverschlüsselungs-/entschlüsselungsmodul darin den Transaktionsprozessschlüssel über den primären Transaktionsschlüssel aus, erzeugt anschließend das Anmeldeantwortpaket, das den ausgesendeten Transaktionsprozessschlüssel enthält, und sendet es über den sicheren Kanal herunter an das Point-of-Sale-Terminal in der Cloud; und
nachdem das Point-of-Sale-Terminal in der Cloud das Anmeldeantwortpaket empfangen hat, greift die Zahlungsanwendung auf das sichere Modul zu, um den Transaktionsprozessschlüssel in dem sicheren Modul zu speichern, wobei der Transaktionsprozessschlüssel durch den primären Transaktionsschlüssel geschützt wird.

## Revendications

1. Un procédé de transfert sécurisé de données sensibles de transaction de Point de Vente basé sur le cloud mis en œuvre par un système d'arrièreplan de Point de Vente cloud, comprenant les étapes consistant à :
(a) échanger une clé de processus de transaction avec un terminal de Point de Vente cloud ;
(b) recevoir, depuis le terminal de Point de Vente cloud, un paquet de demande de transaction crypté à l'aide de la clé de processus de transaction ; et
(c) obtenir des données sensibles de la transaction à partir du paquet de demande de transaction, et effectuer des opérations sur les données sensibles de la transaction en utilisant la clé de processus de transaction afin de les télécharger sur une plate-forme d'acquisition financière ;
l'étape (a) comprenant :
- le fait de recevoir une demande de connexion en provenance d'une application de paiement dans le terminal de Point de Vente cloud ;
- sur la base de la demande de connexion, le fait d'émettre la clé de processus de transaction via une clé primaire de transaction qui est enregistrée dans le système d'arrière-plan du Point de Vente cloud, la clé primaire de transaction correspondant au terminal de Point de Vente cloud, et qui est manuellement injecté dans un module sécurisé du terminal de Point de Vente cloud lors de l'initialisation du terminal de Point de Vente cloud ;
- le fait de générer un paquet de réponse de connexion, le paquet contenant la clé de processus de transaction émise ; et
- le fait d'envoyer le paquet de réponse de connexion jusqu'au terminal de Point de Vente cloud via un canal sécurisé :
l'étape (c) comprenant :
- le fait de parser le paquet de demande de transaction pour obtenir les données sensibles de la transaction ;
- le fait d'utiliser la clé de processus de transaction pour décrypter et effectuer une validation de l'intégrité des données ; et
- le fait de télécharger les données sensibles de la transaction vers la plate-forme d'acquisition financière dans un format de paquet approprié.

2. Un procédé de transfert sécurisé de données sensibles de transaction de Point de Vente basé sur le cloud mis en œuvre par un terminal de Point de Vente cloud, comprenant les étapes consistant à :
(a) échanger une clé de processus de transaction avec un système d'arrière-plan de Point de Vente cloud ;
(b) obtenir les données sensibles de la transaction et utiliser la clé de processus de transaction pour crypter symétriquement les données sensibles de la transaction ; et
(c) envoyer, via un canal sécurisé, un paquet de demande de transaction au système d'arrière-plan du Point de Vente cloud, qui traite le paquet puis le télécharge sur une plate-forme d'acquisition financière, le paquet de demande de transaction contenant les données sensibles de la transaction cryptées :
l'étape (a) comprenant :
- le fait d'lancer une demande de connexion au système d'arrièreplan de Point de Vente cloud via un canal sécurisé ;
- le fait de recevoir le paquet de réponse de connexion en provenance du système d'arrière-plan de Point de Vente cloud, le paquet de réponse de connexion contenant la clé de processus de transaction émise par un module de cryptage/décryptage de transaction dans le système d'arrière-plan de Point de Vente cloud via une clé primaire de transaction, la clé primaire de transaction correspondant au terminal de Point de Vente cloud, et étant injectée manuellement dans le module sécurisé du terminal de Point de Vente cloud lors de l'initialisation du terminal de Point de Vente cloud ; et
- le fait de stocker la clé de processus de transaction protégée par la clé primaire de transaction.

3. Un système de transfert sécurisé pour des données sensibles d'une transaction de Point de Vente basée sur le cloud, comprenant :
un système d'arrière-plan de Point de Vente cloud et un terminal de Point de Vente cloud,
le système d'arrière-plan de Point de Vente cloud contenant :
- un module de cryptage/décryptage de transaction pour gérer une clé de processus de transaction et pour mettre en œuvre l'opération de cryptage/décryptage sur les données sensibles de transaction ; et
- une clé primaire de transaction qui est enregistrée dans le système d'arrière-plan du Point de Vente cloud, la clé primaire de transaction correspondant au terminal de Point de Vente cloud ;
le terminal de Point de Vente cloud contenant un module sécurisé pour au moins enregistrer la clé de processus de transaction et la clé primaire de transaction pour le terminal, la clé primaire de transaction étant manuellement injectée dans le module sécurisé du terminal de Point de Vente cloud lors de l'initialisation du terminal de Point de Vente cloud ;
avant que l'utilisateur du terminal de Point de Vente cloud n'exécute la transaction financière, le système d'arrière-plan du Point de Vente cloud échange la clé de processus de transaction avec le terminal de Point de Vente cloud ; l'application de paiement s'exécutant sur le terminal de Point de Vente cloud accède à l'interface cryptée du module sécurisé, le module sécurisé crypte de manière symétrique les données sensibles de la transaction au moyen de la clé de processus de transaction, et renvoie le texte chiffré crypté à l'application de paiement ; l'application de paiement envoie un paquet de demande de transaction au système d'arrière-plan du Point de Vente cloud via un canal sécurisé ; le système d'arrière-plan du Point de Vente cloud analyse le paquet de demande de transaction, obtient les données sensibles de la transaction, puis utilise la clé de processus de transaction pour décrypter ; le système d'arrière-plan du Point de Vente cloud télécharge les données sensibles de la transaction vers une plate-forme d'acquisition financière sous un format de paquet approprié, le terminal de Point de Vente cloud étant configuré pour échanger la clé de processus de transaction avec le système d'arrière-plan du Point de Vente cloud de la manière suivante :
l'application de paiement s'exécutant sur le terminal de Point de Vente cloud lance la demande de connexion vers le système d'arrière-plan du Point de Vente cloud via le canal sécurisé ;
une fois que le système d'arrière-plan du Point de Vente cloud a reçu la demande de connexion, le module de cryptage/décryptage de transaction qui s'y trouve émet la clé de processus de transaction au moyen de la clé primaire de transaction, puis génère le paquet de réponse de connexion contenant la clé de processus de transaction émise, et l'envoie au terminal de Point de Vente cloud via le canal sécurisé ; et
après que le terminal de Point de Vente cloud ait reçu le paquet de réponse de connexion, l'application de paiement accède au module sécurisé pour enregistrer la clé de processus de transaction dans le module sécurisé, la clé de processus de transaction étant protégée par la clé primaire de transaction.
